Europäisches Patentamt

**European Patent Office**

Office européen des brevets

(19)

(11) Veröffentlichungsnummer: **0 065 030**
**B1**

(12) ## EUROPÄISCHE PATENTSCHRIFT

(45) Veröffentlichungstag der Patentschrift:
**10.04.85**

(51) Int. Cl.⁴: **A 47 J 37/07**

(21) Anmeldenummer: **81104146.6**

(22) Anmeldetag: **30.05.81**

(54) **Untergestell für ein Grillgerät.**

(30) Priorität: **15.05.81 DE 8114419 U**

(43) Veröffentlichungstag der Anmeldung:
**24.11.82 Patentblatt 82/47**

(45) Bekanntmachung des Hinweises auf die Patenterteilung:
**10.04.85 Patentblatt 85/15**

(84) Benannte Vertragsstaaten:
**AT BE CH DE FR GB IT LI NL**

(56) Entgegenhaltungen:
**CH - A - 469 475**
**DE - A - 2 701 552**
**DE - A - 2 930 341**
**FR - A - 1 494 118**
**US - A - 3 285 238**
**US - A - 3 342 122**
**US - A - 3 348 471**
**US - A - 3 521 433**

(73) Patentinhaber: **EW Grosshandel GmbH & Co. KG,**
**Industriestrasse 10, D-2803 Weyhe-Dreye (DE)**

(72) Erfinder: **Wandel, Stephan H.A., Barlachweg 9,**
**D-2800 Bremen (DE)**

(74) Vertreter: **Zinngrebe, Horst, Dr.rer.nat.,**
**Saalbaustrasse 11, D-6100 Darmstadt (DE)**

## Beschreibung

Die Erfindung betrifft ein aus vier Beinen bestehendes Untergestell für ein transportables Grillgerät, wobei zur Aufnahme je eines Beinpaares je eine Lagerplatte vorgesehen ist, in welche das Grillgerät an den beiden gegenüberliegenden Seitenwänden eines Kohlebeckens eingehängt werden kann.

Ein Grillgerät mit gusseisernem Kohlebecken ist beispielsweise bekannt aus der deutschen Patentschrift 2 701 552 sowie aus der US-Patentschrift 4 106 473. Von den vier Beinen können jeweils zwei Beine in Bohrungen einer Lagerplatte eingesteckt werden, an der eine nach oben offene Lagerpfanne für einen aus einer Seitenwand des Kohlebeckens nach aussen vorstehenden Zapfen ausgebildet ist. Das an einer bestimmten Stelle aufgestellte Grillgerät kann dadurch mit den Beinen transportiert werden, dass das Grillgerät als Ganzes durch Unterfassen des Kohlebeckens angehoben und an die gewünschte Stelle getragen wird. Da Grillgeräte aus Blech und vor allem aus Gusseisen hergestellte Grillgeräte sehr schwer sind, behindert dieses Gewicht den Transport des Geräts. Um das Grillgerät daher transport- und manövrierfähig zu machen, müssten die Beine abmontiert und das Grillgerät auf einen fahrbaren Wagen abgesetzt werden, wenn keine kräftige Person zum Tragen des kompletten Geräts zur Verfügung steht.

Es ist daher eine Aufgabe der Erfindung, ein zerlegbares, für Garten und Camping verwendbares Grillgerät zu schaffen, das im vollständig zusammengebauten Zustand sich mit möglichst wenig Kraftaufwand verfahren lässt.

Erfindungsgemäss ist dazu bei dem eingangs genannten Grillgerät vorgesehen, dass jedes Bein an einem Ende mit einer Laufrolle versehen und am anderen Ende abgewinkelt ist, dass die abgewinkelten Abschnitte einen zusammenhängenden Teil eines Beinpaares bilden und an der für das Beinpaar vorgesehenen Lagerplatte (50, 60) formschlüssig und lösbar befestigt sind.

Da das erfindungsgemässe, fahrbare Untergestell zerlegbar ist, braucht das zusammengelegte Grillgerät nicht mehr Raum als herkömmlich zu beanspruchen, so dass auch das erfindungsgemäss verfahrbare Grillgerät im zusammengelegten Zustand sich leicht verpacken und beispielsweise im Kofferraum eines Kraftfahrzeugs unterbringen lässt. Die formschlüssige Verbindung zwischen Beinpaare und Lagerplatte sowie die Verstrebung ermöglichen eine ausgezeichnete Stabilität des aufgebauten Untergestells, das nicht nur das aufgesetzte Grillgerät sicher trägt und gegebenenfalls auch seine Verkippbarkeit gewährleistet, sondern auch in unebenem Gelände leicht geschoben werden kann. Darüber hinaus lässt sich das erfindungsgemässe Untergestell ausserordentlich preiswert herstellen.

Die Verwindungs-Steifheit des Untergestells wird verbessert, wenn in zweckmässiger Weiterbildung der Erfindung die abgewinkelten Abschnitte eines Beinpaares ineinandersteckbar sind. Die Formschlüssigkeit der Verbindung zwischen den zweckmässig aus Rohr gefertigten Beinen und der Lagerplatte lässt sich beispielsweise besonders zweckmässig dadurch erreichen, dass die Lagerplatte eine im Querschnitt halbkreisförmige, langgestreckte Vertiefung aufweist, in welcher je ein Ende der abgewinkelten Beinabschnitte aufeinander zuweisend befestigbar ist. Um die abgewinkelten Beinabschnitte auf der Lagerplatte sicher festzulegen, empfiehlt es sich, eine langgestreckte Halbschale zum Anklemmen der Abschnittsenden an die Lagerplatte vorzusehen.

Die Streben tragen zur Versteifung des Untergestells noch besonders bei, wenn jede Strebe am gegenüberliegenden Ende ein Gewinde trägt und jedes Bein für ein in das Gewinde eingreifendes Befestigungselement durchbohrt ist, wobei dann jede Strebe eine radial vorspringende Anlageschulter zum Anklemmen eines Beins an die Strebe durch das Befestigungselement aufweisen kann.

Wenn in Weiterbildung der Erfindung die Höhe jedes Beines mit Laufrolle grösser ist als die innere Breite des Kohlebeckens, kann das gesamte Untergestell beim Zusammenlegen des Grillgeräts in dem Kohlebecken Platz finden, so dass durch die Erfindung kein zusätzlicher Raum für das zusammengelegte Grillgerät benötigt wird.

Die Erfindung wird nachstehend anhand eines in den beigefügten Zeichnungen dargestellten bevorzugten Ausführungsbeispiels im einzelnen erläutert. Es zeigen:

Fig. 1 eine perspektivische Ansicht eines Holzkohle-Grillgeräts mit fahrbarem Untergestell;

Fig. 2 das Untergestell nach Fig. 1 im zusammengebauten Zustand, von hinten gesehen;

Fig. 3 das zusammengebaute Untergestell nach Fig. 1 ohne Lagerplatten;

Fig. 4 zwei zusammengesteckte Beine aus dem Untergestell nach Fig. 1 ohne Laufrollen;

Fig. 5 die Beine aus Fig. 4 in auseinandergezogenem Zustand;

Fig. 6 eine Lagerplatte gemäss Fig. 1 und 2 in vergrösserter perspektivischer Ansicht mit Klemmschale;

Fig. 7 die Lagerplatte nach Fig. 6 mit angebauter Klemmschale, von hinten gesehen;

Fig. 8 eine Seitenansicht der Lagerplatte aus Fig. 7 und 7 mit angebauter Klemmschale;

Fig. 9 einen vergrösserten Ausschnitt zur Veranschaulichung des Zusammenwirkens zwischen dem Ende einer Strebe und einem rohrförmigen Bein.

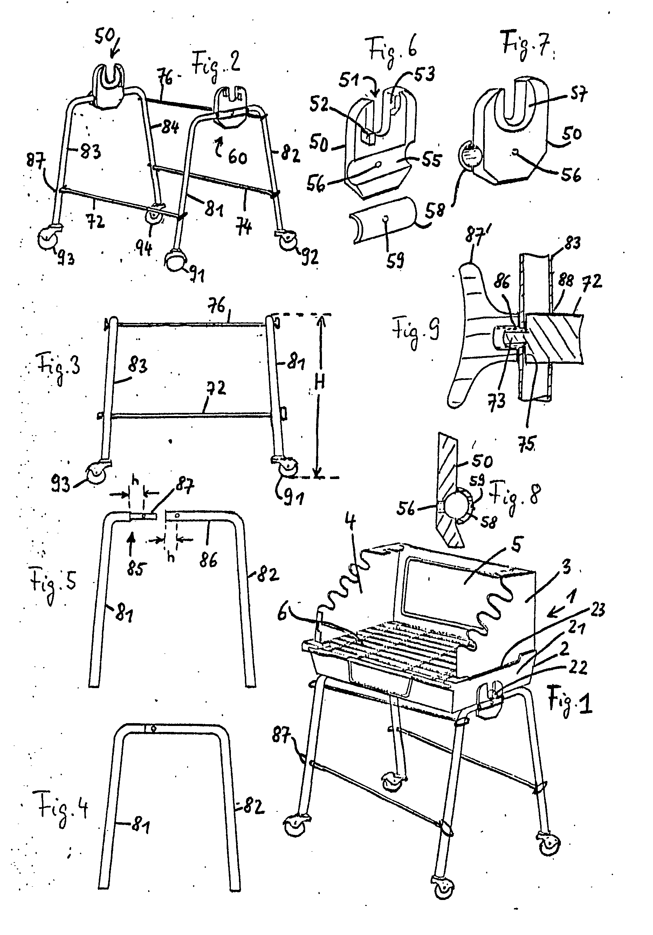

Gemäss Fig. 1 besteht das im Ganzen mit 1 bezeichnete Grillgerät aus einem im wesentlichen rechtwinkligen, oben offenen Kohlekasten 2, aus dessen gegenüberliegenden Seitenwänden je ein Lagerzapfen seitlich vorsteht. In der perspektivischen Ansicht der Fig. 1 ist nur die rechte Seitenwand 21 und der rechte Lagerzapfen 22 dargestellt. An der Oberkante 23 der Seitenwand 21 ist eine gusseiserne Seitenplatte 3 befestigt, welche an der nach oben rückwärts verlaufenden Vorderkante mehrere Ausbuchtungen zur Aufnahme eines nicht dargestellten Grillspiesses aufweist. Die der Seitenplatte 3 gegenüberliegende Seitenplatte 4 ist analog an der Oberkante der nicht dargestellten Seitenwand des Kohlebeckens befestigt. Die Rückwand 5 des Grillgeräts wird von einer aus Blech bestehenden Fettabtropfschale 5 gebildet, welche zwischen die Seitenplatten

3, 4 in Führungen eingesetzt ist. Über die oben offene Seite des Kohlebeckens 2 ist ein Grillrost 6 einschiebbar.

Der Lagerzapfen 22 ruht in einer Lagerpfanne 51 einer Lagerplatte 50, welche gemäss DE-OS 2 701 552 Anschlagnocken 52, 53 aufweist. Diese ermöglichen in bekannter Weise, dass der am freien Ende rechtwinklig abgekröpfte Lagerzapfen 22 zwischen den Nocken 52 und 53 frei beweglich ist und ein Kippen des Grillgeräts nach rückwärts aus der in Fig. 1 dargestellten horizontalen in eine vertikale Position erlaubt.

Erfindungsgemäss ist der untere Teil der Lagerplatte 50 mit einer zur Lagerpfanne 51 querliegenden Vertiefung 55 versehen, welche sich über die ganze Breite der Lagerplatte 50 erstreckt und im Querschnitt halbkreisförmig gestaltet ist. Etwa in der Mitte der Vertiefung 55 ist ein mit Gewinde versehenes Loch 56 in die Lagerplatte gebohrt. Eine zweite Lagerplatte 60 ist symmetrisch gleichartig zur Lagerplatte 50 geformt und besteht wie diese aus Gusseisen. An der ebenen Rückseite der Lagerplatte 50 ist die Lagerpfanne 51 mit einer geglätteten Fläche 57 umgeben, welche mit einer entsprechend gestalteten Fläche an der Seitenwand 21 zur Erleichterung des Kippens des Grillgeräts 1 kooperiert.

Eine Klemmschale 58 ist halbkreisförmig gebogen und so lang wie die Vertiefung 55 und ergänzt gemäss Fig. 8 deren Kontur nach dem Aufsetzen auf die Lagerplatte 50 zu einem im wesentlichen geschlossenen Kreis. Die Klemmschale 58 weist ein Durchgangsloch 59 auf, durch welches eine Gewindeschraube zum Einschrauben in die Bohrung 56 durchgeführt werden kann.

In jedes der verchromten oder in anderer Weise oberflächenvergüteten Eisenrohr-Beine 81, 82, 83, 84 ist an einem Ende je eine Laufrolle 91, 92, 93, 94 üblicher Bauart befestigt, von denen jede um eine im wesentlichen vertikale Achse beliebig schwenkbar ist. An dem jeweils gegenüberliegenden Ende ist jedes Bein 81 ... 84 in einem etwas stumpfen Winkel abgebogen. Wie Fig. 4 und 5 am Beinpaar 81, 82 erläutern ist das Ende 87 eines abgewinkelten Abschnitts 85 des Beines 81 so weit auf einen kleineren Aussendurchmesser verpresst oder abgekröpft, dass das Ende 87 in das offene Ende des abgewinkelten Abschnitts 86 des zum gleichen Beinpaar gehörenden Beines 82 einsteckbar ist. In der Entfernung h von der Abkröpfung ist am Ende 87 ein Durchgangsloch gebohrt, und im gleichen Abschnitt h vom Ende des abgewinkelten Abschnitts 86 ist ebenfalls ein Durchgangsloch gebohrt. Beim Zusammenstecken der Beine 81 und 82 gemäss Fig. 4 fluchten daher die beiden Bohrungen.

Die beiden gleichliegenden Beine 81, 83 sowie 82, 84 jedes Beinpaares sind mit mehreren Streben 72, 74, 76 verbunden. Jede Eisenstrebe endet wie Fig. 9 zeigt in einem Zapfen 73 mit Aussengewinde, der über eine radial vorspringende Schulter 75 in die Strebe 72 übergeht. An der für das Anbringen der Strebe vorgesehenen Höhe sind die gleichliegenden Beine 81, 83 sowie 82, 84 gemäss Fig. 9 durchbohrt, wobei zur Schaffung eines definierten Anschlags die Innenbohrung 86 des Beinrohrs 83 (und entsprechend die übrigen Innenbohrungen an den jeweiligen Verankerungsstellen der Streben 72, 74, 76 an den Beinen 81, 82, 84) grösser als die Aussenbohrung 86, so dass beim Aufschrauben einer Flügelmutter 87' auf den Zapfen 73 der Rand der Bohrung 86 zwischen Flügelmutter 87' und Schulter 75 geklemmt wird.

Die Beine 81, 83 sowie 82 und 84 sind in der unteren Hälfte durch je eine Strebe 72, 74 mit zugehörigen Flügelmuttern fest miteinander verbunden. Eine gleichartige Strebe 76 ist in der Nähe der Abwinklung mit den vorderen Beinen 82, 84 verbunden. An den hinteren Beinen 81, 83 fehlt eine entsprechende Strebe, um die Kippbarkeit des Grillgeräts 1 nach hinten nicht zu behindern.

Zum Zusammenbau des aus den vier Beinen 81, 82, 83, 84 mit Laufrollen 91 ... 94, drei Streben 72, 74, 76 und zwei Lagerplatten 50, 60 mit zugehörigen Klemmschalen 58 bestehenden Untergestells werden zunächst die zu je einem Beinpaar gehörenden Beine 81 und 82 bzw. 83 und 84 in der in Fig. 4 dargestellten Weise mit den abgewinkelten Abschnitten 85, 86 zusammengesteckt. Sodann wird je ein Beinpaar mit den abgewinkelten Abschnitten 85, 86 so in die Vertiefung 55 der Lagerplatte 50 bzw. in eine entsprechende Vertiefung der Lagerplatte 60 eingelegt, dass die fluchtenden Durchgangsbohrungen in den abgewinkelten Abschnitten 85 und 86 mit dem Gewindeloch 56 fluchten. Sodann wird die Klemmschale 58 aussen auf die verbundenen Abschnitte 85, 86 aufgelegt und eine Schraube durch das Loch 59 und die Bohrungen in den abgewinkelten Abschnitten 85, 86 durchgeführt und in das Gewindeloch 56 fest eingeschraubt. Dadurch sind die Beine im Presssitz fest und formschlüssig an der Lagerplatte 50 festgelegt. Sodann werden die drei Streben 72, 74, 76 in die zugehörigen Löcher in den Beinen 81 ... 84 eingeführt und von aussen werden die Flügelmuttern 87 aufgeschraubt und fest angezogen. Danach hat das Untergestell die in Fig. 2 dargestellte Gestalt. Das Grillgerät 1 kann dann in bekannter Weise, d.h. in nach hinten abgekippter, vertikaler Stellung auf das Gestell aufgesetzt werden, wobei die abgekröpften Lagerzapfen 22 in der Lagerpfanne 51 und die entsprechende Lagerpfanne in die Lagerplatte 60 eingleiten und der abgekröpfte Abschnitt (nicht dargestellt) des Lagerzapfens 22 in dem Raum zwischen den Anschlagnocken 52, 53 sich frei bewegen. Das eingesetzte Grillgerät kann dann nach vorne gekippt werden und ist betriebsbereit. In dieser Stellung wie auch in jedem Betriebszustand des Grillgeräts 1 kann dies ersichtlich leicht mitsamt dem Untergestell beliebig und ohne Schwierigkeiten verfahren werden.

Da die Höhe H jedes Beines nicht grösser ist als die lichte innere Breite des Kohlebeckens 2, lassen sich sämtliche Beine wie auch die Streben nach Demontage leicht im Kohlebecken unterbringen. Das Grillgerät 1 kann dann in bekannter Weise durch Umlegen der Seitenplatten 3, 4 und Entnahme der Rückwand 5 zusammengelegt werden.

Die Erfindung ist selbstverständlich auf Einzelheiten des beschriebenen Ausführungsbeispiels nicht beschränkt. So können die abgewinkelten Abschnitte 85, 86 wie auch die Beine insgesamt aus einem Rohr mit rechteckigem Querschnitt geformt sein, und statt der Vertiefung 55 mit Klemmschale 58 kann an die Klemmplatte 50 im unteren Teil ein Einschubkanal mit rechteckigem Querschnitt in Anpassung an die entsprechende Form der Abschnitte 85, 86 ausgebildet sein. Auf diese Weise lässt sich eine formschlüssige Verbindung der Beine 81 ... 84 mit den Lagerplatten 50, 60 ohne Verschraubung und Anklemmen insofern erreichen, als dadurch eine Fixierung der Beine um eine horizontale Achse gesichert ist.

Die Erfindung ist ersichtlich auch auf nicht kippbare Grillgeräte anwendbar, welche mit den Lagerplatten 50, 60 verschraubt werden. Ferner können die Streben 72, 74, 76 ebenfalls aus Rohr bestehen, an deren Enden Gewindestücke für Flügelschrauben eingesetzt sind. Eine besondere Anlageschulter 75 ist in solchen Fällen dann nicht erforderlich. Ferner versteht es sich, dass die Laufrollen 91 ... 94 herausnehmbar in die unteren Enden der Beine 81 ... 84 eingesteckt sind. Wird der Formenschluss zwischen den Beinen 81 ... 84 wie erwähnt durch ein entsprechendes kantiges Profil der abgewinkelten Abschnitte 85, 86 erreicht, können die Streben 72, 74, 76 entfallen oder auf eine diagonal zwischen den Beinpaaren angeordnete Strebe beschränkt werden.

Ferner liegt es im Rahmen der Erfindung, statt separater Lagerplatten 50, 60 vorzusehen, zur Aufnahme der abgewinkelten Abschnitte 85, 86 geeignete Lagerbuchsen direkt an die Seitenwand 21 des Kohlebeckens 2 anzuformen.

## Patentansprüche

1. Aus vier Beinen (81, 82, 83, 84) bestehendes Untergestell für ein Grillgerät, wobei zur Aufnahme je eines Beinpaares je eine Lagerplatte (50, 60) am Kohlebecken des Grillgeräts vorgesehen ist, dadurch gekennzeichnet, dass jedes Bein (81, 82, 83, 84) an einem Ende mit einer Laufrolle (91, 92, 93, 94) versehen und am anderen Ende abgewickelt ist, und dass die abgewinkelten Abschnitte (85, 86) einen zusammenhängenden Teil eines Beinpaares (81, 82, 83, 84) bilden und an der für das Beinpaar vorgesehenen Lagerplatte (50, 60) formschlüssig und lösbar befestigt sind.

2. Untergestell nach Anspruch 1, dadurch gekennzeichnet, dass die gleichliegenden Beine (81, 82, 83, 84) der gegenüberliegenden Beinpaare durch lösbare Streben (72, 74, 76) verbunden sind.

3. Untergestell nach Anspruch 1 oder 2, dadurch gekennzeichnet, dass die abgewinkelten Abschnitte (85, 86) eines Beinpaares ineinandersteckbar sind.

4. Untergestell nach einem der vorstehenden Ansprüche, dadurch gekennzeichnet, dass die Lagerplatte (50) eine im Querschnitt halbkreisförmige, langgestreckte Vertiefung aufweist, in welcher je ein Ende der abgewinkelten Beinabschnitte (85, 86) aufeinander zuweisend befestigbar sind.

5. Untergestell nach einem der vorstehenden Ansprüche, dadurch gekennzeichnet, dass eine langgestreckte Halbschale zum Anklemmen der Abschnittsenden der abgewinkelten Beinabschnitte (85, 86) an die Lagerplatte (50) vorgesehen ist.

6. Untergestell nach einem der vorstehenden Ansprüche, dadurch gekennzeichnet, dass jede Strebe (72, 74, 76) an gegenüberliegenden Enden ein Gewinde (bei 73) trägt und jedes Bein zum Anklemmen der Streben durchbohrt ist.

7. Untergestell nach Anspruch 5, dadurch gekennzeichnet, dass jede Strebe eine radial vorspringende Anlageschulter (75) zum Anklemmen eines Beines an die Strebe durch ein Befestigungselement (87) aufweist.

8. Untergestell nach einem der vorstehenden Ansprüche, mit einer Lagerplatte, in deren Lagerpfanne das Grillgerät mit aus gegenüberliegenden Seitenwänden des Kohlebeckens vorstehenden Lagerzapfen eingehängt werden kann, dadurch gekennzeichnet, dass im unteren Bereich der Beine vorne je eine Strebe (72, 74) und in der Nähe der abgewinkelten Beinabschnitte (85, 86) eine vordere Strebe (76) vorgesehen sind.

9. Untergestell nach einem der vorstehenden Ansprüche, dadurch gekennzeichnet, dass die Höhe jedes Beines mit Laufrolle nicht grösser ist als die innere Breite des Kohlebeckens (2).

## Claims

1. A stand for a grill comprising four legs (81, 82, 83, 84), a mounting plate (50, 60) being provided for each pair of legs on the coal tray of the grill, characterised in that every leg (81, 82, 83, 84) is at one end provided with a wheel (91, 92, 93, 94) and at the other end is angularly offset, and that the angularly offset portions (85, 86) form a continuous part of a pair of legs (81, 82, 83, 84) and are detachably locked with the mounting plate (50, 60) for the respective pair of legs.

2. A stand according to Claim 1, characterised in that the legs (81, 82, 83, 84) on the same side of the opposed pairs of legs are interconnected by detachable struts (72, 74, 76).

3. A stand according to Claim 1 or 2, characterised in that the angularly offset portions (85, 86) of a pair of legs are insertable into each other.

4. A stand according to any one of the preceding claims, characterised in that the mounting plate (50) has an elongate recess of semicircular cross-section in which are fixable, when facing each other, the ends of the angularly offset leg portions (85, 86).

5. A stand according to any one of the preceding claims, characterised in that an elongate semi-shell is provided for clamping of the end parts of the angularly offset leg portions (85, 86) to the mounting plate (50).

6. A stand according to any one of the preceding claims, characterised in that each strut (72, 74, 76) is on opposite ends provided with a thread (at 73) and each leg is bored through for the attachment of the struts.

7. A stand according to Claim 5, characterised in that each strut has a radially extending bearing shoulder (75) for the clamping of a leg to the strut by a fixing element (87).

8. A stand according to any one of the preceding claims, having a mounting plate in the mounting socket of which may be hung the grill by means of mounting pins extending from opposite side walls of the coal tray, characterised in that in the lower part of the legs is at the front and at the back provided a strut (72, 74) and in the vicinity of the angularly offset leg portions (85, 86) is provided a front strut (76).

9. A stand according to any one of the preceding claims, characterised in that the height of each leg, including the wheel, is not greater than the inner width of the coal tray (2).

## Revendications

1. Support de barbecue se composant de quatre pieds (81, 82, 83, 84), avec pour recevoir chaque paire de pieds une plaque d'appui (50, 60) sur la vasque à charbon du barbecue, caractérisé en ce que chaque pied (81, 82, 83, 84) est doté à l'une de ses extrémités d'une roulette (91, 92, 93, 94) et est coudé à l'autre extrémité, et en ce que les tronçons coudés (85, 86) forment une partie de liaison d'une paire de pieds (81, 82, 83, 84) et sont fixés de manière amovible par une liaison par obstacle sur la plaque d'appui (50, 60) prévue pour ladite paire de pieds.

2. Support selon la revendication 1, caractérisé en ce que les pieds d'un même côté (81, 82, 83, 84) des paires de pieds opposées sont reliées par des tirants amovibles (72, 74, 76).

3. Support selon la revendication 1 ou 2, caractérisé en ce que les tronçons coudés (85, 86) d'une paire de pieds sont enfichables l'un dans l'autre.

4. Support selon l'une des revendications précédentes, caractérisé en ce que la plaque d'appui (50) présente un décrochement allongé de section demi-circulaire dans lequel chaque extrémité des tronçons coudés (85, 86) des pieds peut être fixée tournée vers l'autre.

5. Support selon l'une des revendications précédentes, caractérisé en ce qu'une demi-coque de forme allongée est prévue pour le serrage des extrémités des tronçons coudées (85, 86) des pieds sur la plaque d'appui (50).

6. Support selon l'une des revendications précédentes, caractérisé en ce que chaque tirant (72, 74, 76) porte aux extrémités opposées un filetage (73) et en ce que chaque pied est percé pour recevoir les tirants.

7. Support selon la revendication 5, caractérisé en ce que chaque tirant porte un épaulement d'appui en saillie radiale (75) pour le serrage d'un pied sur le support grâce à un élément de fixation (87).

8. Support selon l'une des revendications précédentes, avec une plaque d'appui dans la cuvette d'appui de laquelle peut être suspendu le barbecue à l'aide de tourillons d'appui en saillie sur les parois latérales opposées de la vasque à charbon, caractérisé en ce qu'il est prévu dans la partie inférieure des pieds avant et arrière un tirant (72, 74) et à proximité des tronçons coudés (85, 86) des pieds un tirant avant (76).

9. Support selon l'une des revendications précédentes, caractérisé en ce que la hauteur de chaque pied avec roulette n'est pas supérieure à la largeur intérieure de la vasque à charbon (2).

Fig.2 · Fig.3 · Fig.4 · Fig.5 · Fig.6 · Fig.7 · Fig.8 · Fig.9 · Fig.1